# EUROPEAN PATENT APPLICATION

(11) **EP 1 343 039 A1**
(43) Date of publication of application: **10.09.2003**
(21) Application number: 02251731.2
(22) Date of filing: 12.03.2002
(51) Int. Cl.: G02B 6/42, G02B 6/43

(54) **Optoelectronic module**

(30) Priority: 08.03.2002 GB
(71) Applicant: Agilent Technologies, Inc. - a Delaware corporation -, Palo Alto, CA 94303-0870 (US)
(72) Inventor: Chown, David, Ipswich, Suffolk IP7 6DE (GB)
(74) Representative: Coker, David Graeme

(57) **Abstract**

Known transceivers and transmitters for Dense Wavelength Division Multiplexing (DWDM) systems are typically formed from separately sourced components by a Network Equipment Manufacturer (NEM). Alternatively, transceivers or transmitters are formed as separate modules from separately sourced components by the NEM. Consequently, the NEM has to build the transmitters or transceivers. This construction is difficult, because known optical packages for housing optoelectronic components, such as laser diodes, comprise a fibre "pigtail" through which electromagnetic radiation leaves the optical package. The present invention overcomes this problem by providing a DWDM module apparatus (2) that comprises an optical package (10) for housing optoelectronic components, the optical package (10) comprising a first part of a coupling (12) attached thereto. The coupling is arranged to receive a ferrule connector, thereby facilitating connection of optical fibres to the transmitter or transceiver by means of a patch cord.

## Description

The present invention relates to a Wavelength Division Multiplexing (WDM) module, for example, of the type used to house a WDM transmitter for a WDM communications system, such as a Dense WDM (DWDM) system.

In the field of optical communications, the level of precision and reliability required for optical communication systems depends upon the market in which optoelectronic equipment is being sold. Consequently, in the case of the so-called "access network" market, precision and reliability do not have to be at a level as high as required by the so-called "long-haul" or "transcontinental" market. A particular example of the different requirements for precision is the use of Coarse Wavelength Division Multiplexing (CWDM) in access systems and DWDM in long-haul systems. In CWDM systems the wavelengths of the WDM channels are widely separated and are allowed to vary with, for instance, ambient temperature over 10nm or more, whereas in long-haul systems the wavelengths are accurately maintained in relation to a predefined grid of wavelengths spaced at, for example, 200GHz, 100GHz or 50GHz intervals. The so-called metropolitan market borrows some quality and reliability requirements from the long-haul market and so procurers of optoelectronic equipment for Network Equipment Manufacturers (NEMs) in the WDM part of the metropolitan market, for example for DWDM communications systems, have tended to follow the practice of the long-haul market and procure individual components as opposed to complete single modules, for example, transmitter or transceiver modules. The rationale of NEMs could be, somewhat akin to the rationale employed by HiFi enthusiasts, that no single manufacturer offers the best of all optoelectronic components. Consequently, components that when assembled form, for example, an optoelectronic transmitter are obtained from different sources.

A corollary of procuring individual components is that the NEM must have the skill and resources to assemble the components into, for example, the optoelectronic transmitter.

Where the level of precision and reliability is such that obtaining all components from a single source is merited, the application of the components is cost driven, or particularly where the NEM does not have the skill and resources to assemble the components it has been known for NEMs to procure single modules comprising a number of components forming, for example, a transmitter module or a transceiver module. Typically, such modules comprise an electronic circuit board to which the individual components of the module are soldered. The modules can comprise pins for soldering into an electronic circuit card, or circuit pack, manufactured by the NEM, in order to enable communication of electrical signals between the module and the circuit pack. The systems comprising these circuit packs, populated by optoelectronic modules, are then, typically, sold by the NEM to Network Service Providers (NSPs) to form part of an optical communications network. It is also known to provide such modules in a so-called "Plug & Play" format for easy installation and replacement. In both of the above examples, the module can be provided with an optical connector, such as an LC connector, for coupling to fibre-optic patch cords having a compatible complimentary connector attached to one end thereof. However, due to the prejudice of the need to provide the components forming the module from different sources, such features are not offered by modules for "high-end" metropolitan applications, such as for WDM communications systems.

In a fibre-optic network, the wavelength of light used to communicate a signal is an important parameter. In particular, where WDM systems are employed, different signals are communicated using respectively different wavelengths. Consequently, it is important to maintain the different wavelengths accurately in relation to components of the WDM system, for example multiplexers and demultiplexers, which add or remove wavelengths from the WDM system.

In order to maintain the different wavelengths in relation to components of the WDM system, an optoelectronic WDM transmitter typically comprises a laser diode co-packaged with a thermoelectric cooler, a wavelength locker, a laser diode driver circuit, an electronic circuit to control the thermoelectric cooler and a control loop that receives a wavelength error signal from the wavelength locker and determines whether to heat or cool the laser diode so as to maintain a wavelength of light emitted by the laser at a desired wavelength. An optoelectronic WDM receiver comprises a PIN or APD photodetector, a transimpedance amplifier, and a clock and data recovery electronic circuit. Typically, additional functions are provided, such as a power supply regulation and transmitter disable and loss of signal alarms.

For WDM applications, the co-packaged laser diode and thermoelectric cooler are typically provided in an industry standard 14 pin "butterfly" package having a fibre "pigtail", the photodetector being contained separately in a hermetic package, also having a fibre "pigtail". The integrated circuits and passive components also required to form the transmitter, can be attached to the NEM's circuit pack either by direct soldering of the individual components to the circuit pack, or by soldering to an electrical circuit board to form a transmitter module, the transmitter module being soldered to the circuit card. The integrated circuits and passive components can be soldered onto the circuit pack or the electrical circuit board using standard manufacturing techniques, such as wave soldering. However, in addition to the act of soldering of individual components onto the circuit pack being a cumbersome exercise for the NEMs, the butterfly package is incompatible with the wave soldering technique. The incompatibility arises through the fibre pigtails being adversely affected, for example melted, at the high temperatures involved in the wave soldering technique and that the fibre pigtails can not be handled by standard automatic manufacturing machinery used in the wave soldering technique. These incompatibilities result in the need to assemble transmitter and transceiver circuit packs manually for WDM applications. In addition, the fibre pigtails may need to be spliced to a tap coupler to allow the wavelength locker to monitor the wavelength of light emitted by the laser diode; splicing fibre pigtails is an inconvenient and labour-intensive process. Additionally, the fibre pigtails may need to be spliced to other fibres for communication between the module and the communications network. Furthermore, the discrete components forming the modules are large in number and consequently occupy a large area of the circuit pack, thus limiting the number of transmitters or receivers which can be integrated onto a single circuit pack.

According to a first aspect of the present invention, there is provided a module apparatus for a Dense Wavelength Division Multiplexing (DWDM) communications system, the apparatus comprising: an optical package for housing optoelectronic components, the optical package being disposed within a housing and including a source of electromagnetic radiation; and an electrical circuit board electrically coupled to one or more optoelectronic component within the optical package, characterised in that: the optical package comprises a first part of a coupling attached thereto, the coupling being arranged to receive a ferrule connector.

Preferably, the coupling is configured and dimensioned to receive the ferrule connector having an optical fibre therein.

Preferably, the housing further comprises means for maintaining the wavelength of the electromagnetic radiation at a desired wavelength. More preferably, the means for maintaining the wavelength of the electromagnetic radiation at a desired wavelength is located within the optical package.

Preferably, the optical connector maintains a fixed spatial relationship with respect to the housing.

Preferably, the means for maintaining the wavelength of the electromagnetic radiation at a desired wavelength of the electromagnetic radiation is a wavelength locker.

Preferably, the apparatus further comprises an electrical connector. More preferably, the electrical connector is coupled to or part of the electrical circuit board. Very preferably, the electrical connector is an edge connector.

Conveniently, the electrical connector is disposed at a distal end of the housing with respect to the optical connector.

Preferably, the electrical connector is detachably connectable to another circuit board comprising a complimentary electrical connector for coupling to the electrical connector.

Preferably, the optical connector is disposed within an LC connector socket.

Preferably, the housing is formed so as to dissipate heat. More preferably, the housing comprises fins so as to dissipate heat.

According to a second aspect of the present invention, there is provided a DWDM optical package for housing optoelectronic components, the package comprising: a housing for containing a source of electromagnetic radiation, and an optical connector for coupling an optical fibre thereto and into which the electromagnetic radiation can be launched; characterised in that: the optical connector comprises a first part of a coupling attached thereto, the coupling being arranged to receive a ferrule connector.

According to a third aspect of the present invention, there is provided a use of a package in a WDM system, the package comprising a housing for containing a source of electromagnetic radiation and having an optical connector coupled to the exterior of the housing.

According to a fourth aspect of the present invention, there is provided a use of a module apparatus in a WDM system, the module apparatus comprising an optical package for housing optoelectronic components, the optical package being disposed within a housing and including a source of electromagnetic radiation; and an electrical circuit board electrically coupled to one or more optoelectronic component within the optical package, the optical package comprising a first part of a coupling attached thereto, the coupling being arranged to receive a ferrule connector.

It should be appreciated that references to "light" herein refer to electromagnetic radiation of wavelengths between about 300 nm and about 10 µm, preferably between about 400 nm and about 2 µm, very preferably between about 800nm and 1700nm.

It is thus possible to provide a module apparatus that can be manufactured using industry standard soldering techniques and supports WDM. The provision of the optical connector enables coupling of a fibre-optic patch cord to the optical package, thereby enabling connection to a WDM system without the need to splice the optical fibre when setting up the WDM system and in the event that the module apparatus fails. Additionally, the provision of the electrical connector permits easy removal of the module apparatus from a circuit card without the need to de-solder the module apparatus. The compatibility of the module apparatus with industry standard soldering techniques provides an additional advantage of reduced manufacturing cost. Additionally, the avoidance of use of fibre pigtails results in a simpler design with which lower manufacturing costs are associated due, since the need to fibre pigtails is obviated.

At least one embodiment of the invention will now be described, by way of example only, with reference to the accompanying drawing, in which:

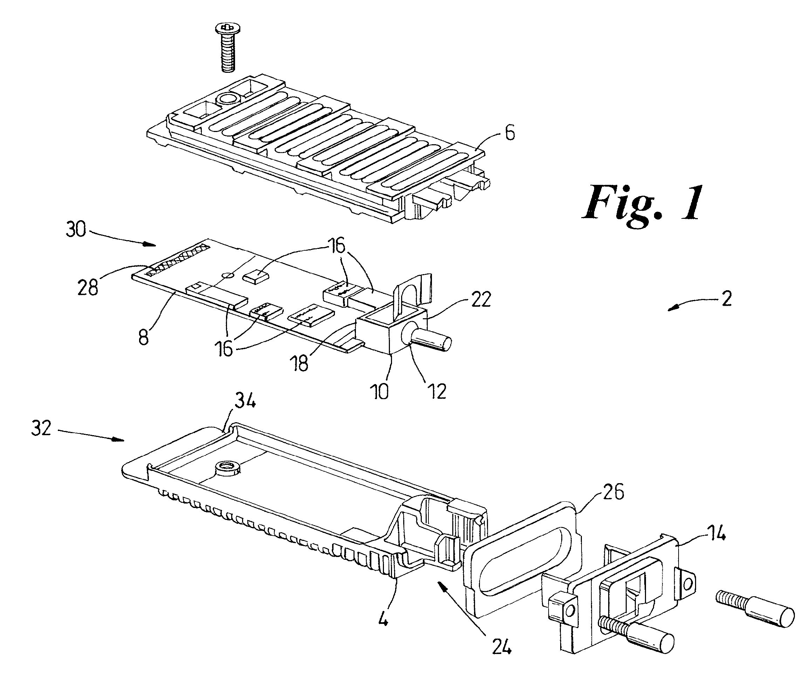

**Figure 1** is a schematic diagram, in exploded view form, of a DWDM module apparatus constituting an embodiment of the invention.

Referring to Figure 1, a DWDM module 2 comprises a two-part aluminium housing having, in this example, fins formed therein for heat dissipation purposes. The two-part housing comprises a base portion 4 and a cover portion 6 which, when brought together, define a rectangular cavity in which an electrical circuit board 8 is disposed as well as an optical package 10, for example, an optical connector 12 (configured and dimensioned to receive a ferrule connector, such as a ferrule connector having an optical fibre therein) and electronic components 16, such as a microprocessor and/or components constituting part of a driver circuit.

The electrical circuit board 8 is populated with the components 16. The optical package 10 comprises a housing for a number of optoelectronic components, including a source of electromagnetic radiation, for example, a laser diode (not shown). In addition, the optical package 10 houses components for detecting the wavelength of the electromagnetic radiation emitted by the laser diode which, together with appropriate circuitry on the electrical circuit board 8, constitute a means for maintaining the wavelength of the electromagnetic radiation emitted by the laser device at a desired wavelength; a so-called "wavelength locker". The provision of the wavelength locker within the module apparatus 2 and, in particular in this example, within the optical package 10 provides control, when in use, of the wavelength of the electromagnetic radiation emitted by the laser diode. It should be appreciated that any suitable combination of optoelectronic components can be used as components to detect the wavelength of the electromagnetic radiation emitted by the laser diode.

Leads (not shown) pass through a first side wall 18 of the optical package 10, first ends thereof being coupled to one or more of the number of optoelectronic components, for example the laser diode, within the optical package 10. Second ends of the leads are soldered to the electrical circuit board 8, thereby effectively coupling the optical package 10 to the electrical circuit board 8.

The optical connector 12 (sometimes known as a "receptacle") is fixed to a second side wall 22 of the optical package 10 and is aligned with an aperture (not shown) in the second side wall 22 through which electromagnetic radiation emitted by the laser diode can propagate. As in known in the art, a lens can be disposed in the aperture if required. In use, the optical connector 20 can be coupled to a fibre-optic patch cord having the ferrule connector disposed at one end thereof in order to provide a medium through with the electromagnetic radiation can propagate for a DWDM communications system.

A face plate 14 is coupled to a first end 24 of the two-part housing, a gasket 26 being disposed between the face plate 14 and the first end 24 of the two-part housing. The coupling of the face plate 14 to the first end 24 is an ancillary feature of the DWDM module 2 and so will not be described further.

The electrical circuit board 8 is printed, using any suitable known circuit board printing technique, so as to provide an edge connector 28 at a distal end 30 of the electrical circuit board 8 relative to the optical package 10. The electrical circuit board 8 protrudes slightly beyond a second end 32 of the two-part housing through a slot 34 in order to expose the edge connector 28 and allow the edge connector 28 to access a complimentary electrical connector provided, for example, on a circuit pack (another circuit board) of an NEM. It should, of course, be appreciated that other types of connector can be provided in order to communicate electrical signals on and off of the blade 8.

The components 16 and the leads from the optical package 10 are soldered to the electrical circuit board 8. In this example, the components 16 are soldered on to the electrical circuit board 8 by a wave soldering technique. However, other suitable manufacturing techniques can be employed instead.

Although in the above example, the optical package 10 comprising the laser diode is described, i.e. the module apparatus is a transmitter module, it should be appreciated that a further optical package can be provided in the two-part housing, the further optical package containing a photodetector or the like. Suitable modifications to the electrical circuit board 8 would, of course, also be required, in such an example, the module apparatus 2 would be a transceiver module apparatus.

It should be appreciated that, in the above example, the optical connector 12 forms part of an LC connector integrally formed with the two-part housing. However, other connector forms may equally be employed.

## Claims

1. A module apparatus for a Dense Wavelength Division Multiplexing (DWDM) communications system, the apparatus comprising:
an optical package for housing optoelectronic components, the optical package being disposed within a housing and including a source of electromagnetic radiation;
and an electrical circuit board electrically coupled to one or more optoelectronic component within the optical package, **characterised in that**:
the optical package comprises a first part of a coupling attached thereto, the coupling being arranged to receive a ferrule connector.

2. An apparatus as claimed in Claim 1, wherein the housing further comprises means for maintaining the wavelength of the electromagnetic radiation at a desired wavelength.

3. An apparatus as claimed in Claim 2, wherein the means for maintaining the wavelength of the electromagnetic radiation at a desired wavelength is located within the optical package.

4. An apparatus as claimed in any one of the preceding claims, wherein the optical connector maintains a fixed spatial relationship with respect to the housing.

5. An apparatus as claimed in Claim 1, wherein the means for maintaining the wavelength of the electromagnetic radiation at a desired wavelength of the electromagnetic radiation is a wavelength locker.

6. An apparatus as claimed in any one of the preceding claims, further comprising an electrical connector.

7. An apparatus as claimed in Claim 6, wherein the electrical connector is coupled to or part of the electrical circuit board.

8. An apparatus as claimed in Claim 6 or Claim 7, wherein the electrical connector is an edge connector.

9. An apparatus as claimed in any one of Claims 6 to 8, wherein the electrical connector is disposed at a distal end of the housing with respect to the optical connector.

10. An apparatus as claimed in any one of Claims 6 to 9, wherein the electrical connector is detachably connectable to another circuit board comprising a complimentary electrical connector for coupling to the electrical connector.

11. An apparatus as claimed in Claim 1, wherein the optical connector is disposed within an LC connector socket.

12. An apparatus as claimed in any one of the preceding claims, wherein the housing is formed so as to dissipate heat.

13. An apparatus as claimed in Claim 12, wherein the housing comprises fins so as to dissipate heat.

14. A DWDM optical package for housing optoelectronic components, the package comprising:
a housing for containing a source of electromagnetic radiation, and
an optical connector for coupling an optical fibre thereto and into which the electromagnetic radiation can be launched; **characterised in that**:
the optical connector comprises a first part of a coupling attached thereto, the coupling being arranged to receive a ferrule connector.

15. A use of a package in a DWDM system, the package comprising a housing for containing a source of electromagnetic radiation and having an optical connector coupled to the exterior of the housing.

16. A use of a module apparatus in a DWDM system, the module apparatus comprising an optical package for housing optoelectronic components, the optical package being disposed within a housing and including a source of electromagnetic radiation; and an electrical circuit board electrically coupled to one or more optoelectronic component within the optical package, the optical package comprising a first part of a coupling attached thereto, the coupling being arranged to receive a ferrule connector.
